(19) Europäisches Patentamt
European Patent Office
Office européen des brevets

(11) EP 1 268 045 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **01911711.8**

(22) Anmeldetag: **01.03.2001**

(51) Int Cl.[7]: **B01D 71/52**, B01D 71/68, H01M 8/10

(86) Internationale Anmeldenummer:
**PCT/EP2001/002311**

(87) Internationale Veröffentlichungsnummer:
**WO 2001/064322 (07.09.2001 Gazette 2001/36)**

(54) **NEUE BLENDPOLYMERMEMBRANEN ZUM EINSATZ IN BRENNSTOFFZELLEN**

NOVEL BLEND POLYMER MEMBRANES FOR USE IN FUEL CELLS

NOUVELLES MEMBRANES CONSTITUEES D'UN MELANGE DE POLYMERES, DESTINEES A ETRE UTILISEES DANS DES PILES A COMBUSTIBLE

(84) Benannte Vertragsstaaten:
**AT BE CH CY DE DK ES FI FR GB GR IE IT LI LU MC NL PT SE TR**

(30) Priorität: **02.03.2000 DE 10010001**

(43) Veröffentlichungstag der Anmeldung:
**02.01.2003 Patentblatt 2003/01**

(73) Patentinhaber: **Celanese Ventures GmbH**
**65926 Frankfurt (DE)**

(72) Erfinder: **CUI, Wei**
**89134 Blaustein (DE)**

(74) Vertreter: **Luderschmidt, Schüler & Partner**
**Patentanwälte**
**Industriepark Höchst**
**65926 Frankfurt (DE)**

(56) Entgegenhaltungen:
**DE-A- 3 936 997**
**DE-A- 19 813 613**
**DE-A- 19 817 374**
**DE-A- 19 817 376**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Blendpolymermembranen auf Basis von sulfonierten aromatischen Arylpolymeren und deren Verwendung als Polymerelektrolyt-Membran in Brennstoffzellen, insbesondere in Niedertemperatur-Brennstoffzellen .

Die Brennstoffzellentechnologie weist ein großes Anwendungspotential in Bereichen Raumfahrt, Straßenfahrzeuge, U-Booten und stationärer Energieversorgung auf. Insbesondere die Kraftfahrzeuge mit Brennstoffzellen-Antrieben gelten als Hoffnungsträger für verbesserten Umweltschutz im Verkehrsbereich. Neben einigen technischen Problemen zeichnet sich jedoch ein besonderes Problem des "Kosten-Nutzen-Verhältnisses" ab. Eine drastische Kostensenkung der Brennstoffzellen ist unbedingt notwendig. Daher ist die Entwicklung der preiswerten Elementen mit erforderlicher Performance für Brennstoffzellen von großem Interesse.

Üblicherweise enthält eine Polymerelektrolytmembran-Brennstoffzelle Zelleneinheiten bestehend aus Stromableiter, Gasverteiler, Elektroden und Polymerelektrolyt-Membran. Die Elektroden enthalten üblicherweise Platin als Katalysator. Derartige Brennstoffzellen arbeiten mit gasförmigen Wasserstoff oder mit Methanol (DMFC Direct Methanol Fuel Cell).

Im Hinblick auf die Anwendung in Brennstoffzellen müssen Membranen nicht nur eine ausreichende chemische und mechanische Stabilität sowie eine hohe Protonenleitfähigkeit aufweisen, sondern auch preiswert herstellbar sein. Aus diesem Grund sind preiswerte Ausgangsmaterialien mit hervorragenden Eigenschaften zur Funktionalisierung und die preiswerten Verfahren zur Membranherstellung die entscheidenden Rollen.

Die bislang verwendeten perfluorierten Kationenaustauschermembranen zeigen hier starke Defizite. Neben dem komplexen Herstellungsverfahren und dem Recyclingsproblem ist dieser Werkstoff sehr teuer und besitzt eine hohe Methanol-Permeabilität, welche die Anwendung dieser Membranen in Methanol-Brennstoffzellen stark limitiert.

Weitere Membranenmaterialien sind modifizierte hochtemperaturbeständige Polymere wie Polybenzimidazol (PBI) und Polyethersulfon (PES). Üblicherweise wird hierzu das PBI mit Phosphorsäure behandelt [Wainright, J.S.; Wang, J.-T.; Savinell, R.F.; Litt, M.; Moaddel, H.; Rogers, C.: Acid Doped Polybenzimidazoles, A New Polymer Electrolyte; The Electrochemical Society, Spring Meeting, San Francisco, May 22-27, Extended Abstracts, Vol.94-1, 982-983 (1994)]. Die Phosphorsäuremoleküle werden zum einen durch Wasserstoffbrückenbindungen an Polymer angehaftet und zum anderen durch Protonierung der Imidazol-Gruppierungen in der Membran angebunden. Problematisch ist jedoch, daß die Phosphorsäure allmählich mit dem Wasser, das während des Betriebes der Brennstoffzelle entsteht, aus der PBI-Materix ausgeschieden wird. Des weiteren weist die PBI-Phosphorsäure-Membran einen sehr niedrigen E-Modul auf, weshalb eine unbefriedigende Membranstabilität in Brennstoffzellen zu erwarten ist.

Aus EP-A-0574791 und der Literatur [Nolte, R.; Ledjeff, K.; Bauer, M. und Mülhaupt, R.: Partially Sulfoned poly(arylene ether sulfone)-A Versatile Proton Conducting Membrane Material for Modem Energy Conversion Technologies; Journal of Membrane Science 83, 211-220 (1993)] sind preiswerte Alternativmaterialien auf Basis sulfonierter Arylpolymere, beispielsweise sulfoniertes PEEK, PEK und PES bekannt. Jedoch zeigen die Kationenaustauschermembranen aus derartigen sulfonierten Arylpolymeren ein starkes Quellungsverhalten bei erhöhter Temperatur. Dadurch ist die Eignung solcher Membranen zum Einsatz in einem Brennstoffzellensystem stark eingeschränkt.

Aus DE-A-4422158, DE-A-198 13 613, DE-A-198 17 376 und DE-A-198 17 374 sind Blendpolymermembranen auf Basis von sulfonierten Arylpolymeren bekannt, die eine verbesserte mechanische Stabilität aufweisen.

Eine wesentliche Voraussetzung für derartige Blends liegt in der Kompatibilität der gewählten Materialien. Hierzu sollten nur solche Materialien gemischt werden deren chemische Struktur ähnlich ist und wenn spezifische Wechselwirkungen bei Polymeren mit zueinander komplementären Gruppierungen auftreten, z.B. die Bildung von Polysalz aus Polysäure und Polybase, eine Wasserstoffbrückenbildung etc..

Der wesentliche Vorteil der Blendpolymermembranentwicklung ist es, daß der Membranaufbau bzw. die Membraneigenschaften durch Variation der Blendkomponente sowie des Mischungsverhältnisses gezielt optimiert werden können.

So beschreibt DE-A-4422158 die Blendpolymermembranen aus sulfoniertem Polyetherketon (PEK) und unmodifiziertem Polyethersulfon (PES). Die beiden Komponenten sind vollständig in einander mischbar, was auf ihre sehr ähnlichen chemischen Strukturen und die Polarität von PES ( Ion-Dipol-Wechselwirkung) zurückzuführen ist. Diese durch Strukturähnlichkeit entstandene Wechselwirkung erscheint jedoch noch unzureichend, so daß die Gefahr besteht, daß diese Membranen bei einer beim Betrieb in Brennstoffzellen erforderlichen Ionenaustauscherkapazität bei erhöhter Temperatur sehr stark quellen.

In DE-A-4422158 werden drei oder vier Komponenten-Blends aus sulfoniertem PEK, PES, Polyvinylpyrrolidon (PVP) und Polyglykoldimethylether (PG) beschrieben, die eine bessere Wasseraufnahme aufzeigen, ohne jedoch eine quantitative Angabe zu machen.

Aus DE-A-198 17 374 sind Blends aus sulfoniertem Arylpolymer (PEEK und PSU) und Polybenzimidazol PBI bekannt, die eine kovalente Vernetzung durch die Protonenübertragung von sulfoniertem Arylpolymer auf PBI (z.B. PEEK-$SO_2$-O-H-N-PBI) besitzen. Diese Vernetzung findet bereits bei der Raumtemperatur im Lösungsmittel, beispielsweise N-Methylpyrrolidon (NMP) statt, wodurch sich ein unlöslicher Polyelektrolytkomplex ausbildet. Zur Herstellung der Blendpolymermembran muß das sulfonierte Arylpolymer in eine lösliche Salzform umgewandelt werden. Dieser zusätzliche Schritt gestaltet die Herstellung der Membran aufwendig.
Die Wechselwirkung zwischen PBI und Arylpolymer ist so stark, daß eine hohe Inhomogenität in der Membran zwischen der Vemetzungsregion, der von Wasser gequollenen Gelphase und Polymermaterix verursacht werden. Folglich kann eine Innenspannung in der Membran entstehen, welche zu einer Verschlechterung der mechanischen Stabilität der Membran führen kann.

Aus dem Stand der Technik sind Blendpolymermembranen aus sulfoniertem Arylpolymer PEEK oder PSU mit aminiertem Polysulfon (PSU) bekannt. Hierzu beschreibt Cui, W in Entwicklung und Charakterisierung von KationenaustauscherMembranen aus Arylpolymeren (VDI-Verlag; ISBN 3-18-359603-2) das aminierte Polysulfone eine schwache Polybase sind und folglich eine Polysäure-Base-Mischung in der Lösung hergestellt werden kann. Zwischen den Blendkomponenten befinden sich sowohl die ionische Wechselwirkung als auch die Wasserstoffbindungen, d. h. die Ringstrukturen, welche eine physikalische Vemetzung aufweisen. Diese Blendpolymermembran wurde in PEMFC und DMFC getestet und daraus ergab sich eine Stromdichte von 1.0-1.2 A/cm$^2$ bei einer Spannung von 0.7V in $H_2$/$O_2$-PEMFC und von 0.4 bis 0.6 A/cm$^2$ in Luft/$H_2$-PEMFC. In DMFC zeigte diese Membran auch eine vergleichbare U-I-Kennlinie wie beispielsweise Nafion-117.
Vor diesem Hintergrund hat die Entwicklung der durch ionische Wechselwirkung vemetzten Blendpolymermembranen zum Einsatz in Brennstoffzellen gute Perspektiven für Niedertemperatur-Brennstoffzellen.

Der vorliegenden Erfindung liegt die Aufgabe zugrunde, ein kostengünstiges Polymerblend bereitzustellen, aus dem Polymerelektrolyt-Membranen für Brennstoffzellen hergestellt werden können, wobei diese zumindest die gleiche oder eine verbesserte Performance gegenüber dem Stand der Technik aufweisen.

Mit Hilfe des aufzufindenden Polymerblends, soll das Eigenschaftsprofil dieser Membranen durch Variation des Mischungsverhältnisses gezielt auf die Betriebsbedingungen in Brennstoffzellen angepaßt werden können.

Gelöst wird die vorstehende Aufgabe durch neue durch ionische Wechselwirkung vernetzten Blendpolymermembranen auf Basis von modifizierten Polyethersulfon und Polyetherethersulfon, z.B. aminiertem Polyethersulfon als Verstärker und sulfoniertem Arylpolymer als Funktionspolymer sowie einem Weichmacher.

Gegenstand der vorliegenden Erfindung ist eine Blendpolymermembran enthaltend

A) mindestens ein Funktionspolymer auf Basis eines oder mehrer sulfonsäuregruppentragende Arylpolymerer aufweist,
B) mindestens einen Verstärkungspolymer auf Basis eines oder mehrer aminierter Polyethersulfone / Polyetherethersulfone oder nitrierter Polyethersulfone /Polyetherethersulfone, welches durch seine Wechselwirkung mit dem Funktionspolymer die Stabilität der Membran gegen das Quellungsverhalten verbessert und
C) mindestens einem Weichmacher der die Sprödigkeit der zuvorgenannten Polymere verringert.

Bei dem erfindungsgemäß eingesetzten Funktionspolymer handelt es sich um sulfonierten Arylpolymere beispielsweise wie sulfoniertes PEEK (SPEEK) , sulfoniertes PEK (SPEK), sulfoniertes PEEKK (SPEEKK), sulfoniertes PES (SPES) sulfoniertes PEES (SPEES).

Bei den Erfindungen kann die Blendpolymermembran aus PBI und modifiziertem Polyethersulfon oder modifiziertem Polyetherethersulfon hergestellt werden. Diese Blendpolymermembran wird wie PBI-Membran durch Phosphorsäure funktionalisiert.

Derartige Arylpolymere enthalten aromatische Bausteine ausgewählt aus der Gruppe

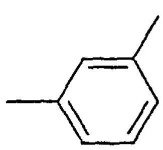 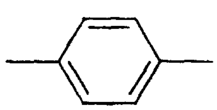 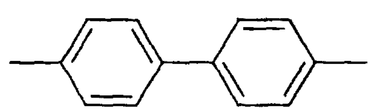 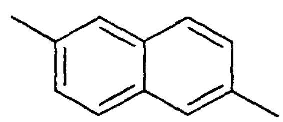

und temperaturstabile Bindungen ausgewählt aus der Gruppe

$-CF_2-$ $-O-$ 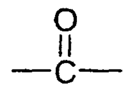 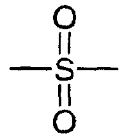 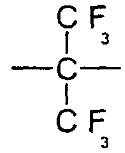

Die Sulfonierung von Arylpolymeren ist bekannt. So beschreibt EP 0574791 die Herstellung von sulfoniertem PEEK. Aus EP-A-008895, EP-A-041780 und EP 0576807 ist die Herstellung von sulfoniertem PEK bekannt. Die Herstellung von sulfoniertem PEEKK ist aus E. Müller in "Vernetzte PEEKK-Sulfonamide zur Trennung von Aliphaten/Aromaten-Gemischen" [Diplomarbeit, 1995, Hoechst AG, Frankfurt/Main] bekannt. In EP-A-0008894 und EP-A-0112724 wird die Herstellung von Polyethersulfon beschrieben.

Der Sulfonierungsgrad beträgt vorzugsweise zwischen 0,1 und 100 %

Das erfindungsgemäße Funktionspolymer wird in Mengen zwischen 30 und 99,9 Gew.-% bezogen auf das Gesamtpolymere eingesetzt.

Bei dem erfindungsgemäß eingesetzten Verstärkungsspolymer handelt es sich um aminierte Polyethersulfon und Polyetherethersulfon enthaltend die Struktureinheiten

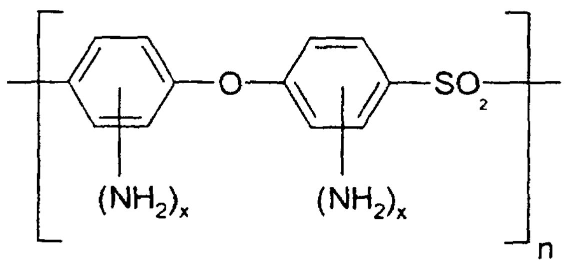

oder

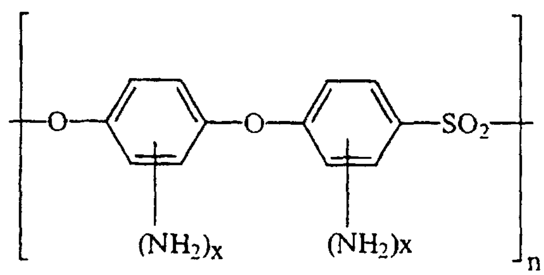

bei denen x unabhängig eine ganze Zahl 0, 1, 2, 3 oder 4 ist,
oder um nitrierte Polyethersulfon und Polyetherethersulfon enthaltend die Struktureinheiten

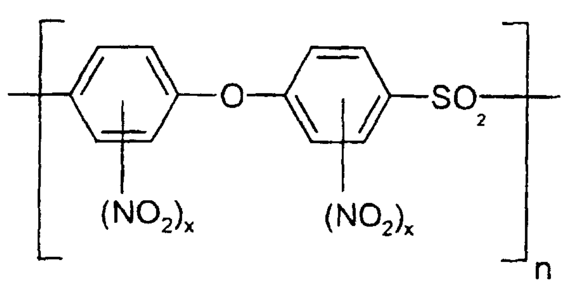

oder

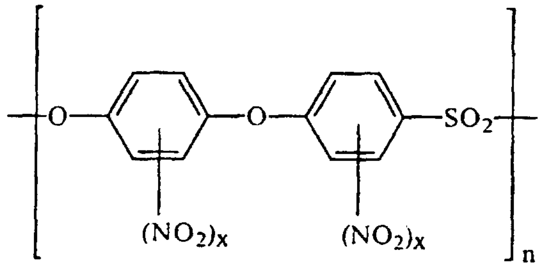

bei denen x unabhängig eine ganze Zahl 0, 1, 2, 3 oder 4 ist

Besonders bevorzugt sind aminierte Polyethersulfone und Polyetherethersulfone enthaltend Struktureinheiten der Typen

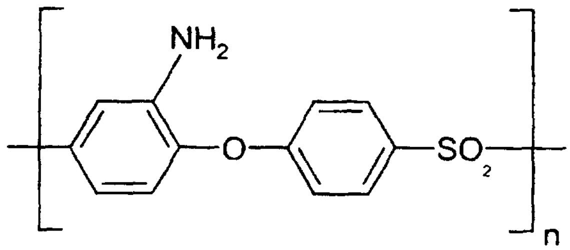

oder

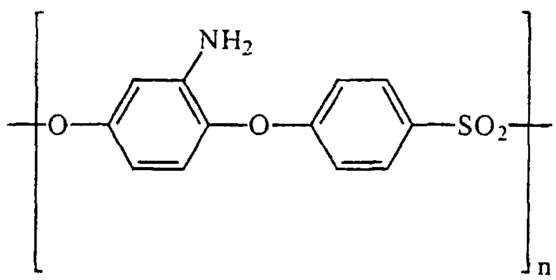

Besonders bevorzugt sind nitrierte Polyethersulfone und Polyetherethersulfone enthaltend Struktureinheiten der Typen

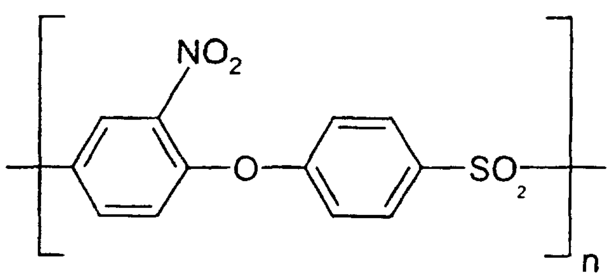

oder

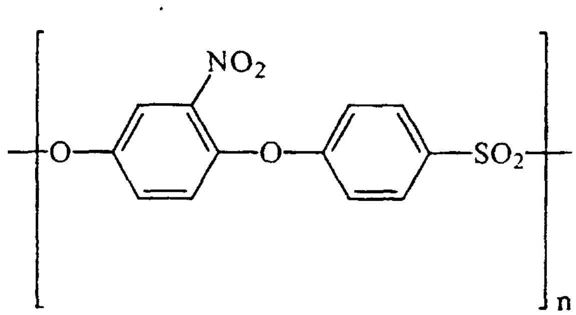

Das erfindungsgemäße Verstärkungspolymer wird in Mengen zwischen 0,1 und 70 Gew.-%, vorzugsweise 10 bis 50 Gew.-%, bezogen auf das Gesamtpolymere eingesetzt.

Die ionische Wechselwirkung zwischen den Blendkomponenten (Polysäure-Polybase-Blends bzw. Polysäure-Polysäure-Blends) läßt sich wie folgt dargestellen:

$$\text{PES-NH}_2 + \text{Arylpolymer-SO}_3\text{H} \rightarrow \text{PES-(NH}_3)^{+-}\text{SO}_3\text{-Arylpolymer}$$

$$\text{PES-NO}_2 + \text{Arylpoymer- SO}_3\text{H} \rightarrow \text{PES-(NO}_2\text{-H)}^{+-}\text{SO}_3\text{-Arylpolymer}$$

z.B.:

$$\text{PES-NH}_2 + \text{PES- SO}_3\text{H} \rightarrow \text{PES-(NH}_3)^{+-}\text{SO}_3\text{-PES}$$

$$\text{PES-NO}_2 + \text{PES- SO}_3\text{H} \rightarrow \text{PES-(NO}_2\text{-H)}^{+-}\text{SO}_3\text{-PES}$$

Das sulfonierte Polyethersulfon (PES-SO3H) und das nitrierte PES (PES-N02) sind beide Polysäure und daher vollständig in einander mischbar. Die Verträglichkeit zwischen PES-SO3H und aminiertem PES (PES-$NH_2$) ist aufgrund der vollständigen Mischbarkeit der Polysäure-Polybase-Mischung unbedenklich. Dabei dient PES-$NH_2$ und PES-$NO_2$ als "makromolekulares Gegenionen" zur Verstärkung der Membran. Die ionische Verbindung wird zwar bei erhöhter Temperatur in Wasser aufgelöst, die Wechselwirkung bleibt aber wegen der Lokalisierung der "makromolekularen Gegenionen" an den Stellen erhalten. Aus diesem Grund wird die Membran zum einen bei erhöhter Temperatur durch diese "makromolekularen Gegenionen" verstärkt und zum anderen wird der Ionentransport wegen dieser Auflösung begünstigt. Damit weist die erfindungsgemäße Membran bei erhöhter Temperatur die günstigen Eigenschaften für den Einsatz in Brennstoffzellen auf.
Polyethersulfone (PES) sind kommerziell erhältlich und zeichnen sich durch hohe thermische, chemische Beständigkeit und mechanische Stabilität aus. Durch die Polarität des Polymers wird die Wasseraufnahme begünstigt.
Die Herstellungsverfahren von nitriertem und aminiertem Polyethersulfon sowie nitriertem und aminiertem Polyetherethersulfon werden in der zeitgleich eingereichten deutschen Patentanmeldung Nr. 10010002.3 beschrieben.

Als Weichmacher im Sinne der Erfindung werden solche verstanden, die die Sprödigkeit der aus dem Polymerblend hergestellten Membran verringern. Geeignete Weichmacher müssen unter den in einer Brennstoffzelle herrschenden Bedingungen innert sein. Des weiteren müssen die Weichmacher mit dem Funktions- und Verstärkungspolymeren mischbar und verträglich sein, sowie in den gleichen dipolarem Lösungsmittel, beispielsweise Dimethylformamid (DMF), Dimethylfoxid (DMSO), N-Methylpyrrolidon (NMP) oder N,N-Dimethylacetamid (DMAC) lösbar sein.

Besonders bevorzugt wird ein lineares Polyvinylidenfluorid (PVDF) als Weichmacher verwendet. Die Drei-Komponenten-Blendpolymermembran aus Funktionspolymer, Verstärker und Weichmacher ist aufgrund der Wasserstoffbrückenbindung, Säure-Base-Wechselwirkung und Ion-Dipol-Wechselwirkung miteinander mischbar. Eine physikalische Vemetzung in der Membran trägt ebenfalls dazu bei. Jedoch ist die Ion-Dipol-Wechselwirkung zwischen PVDF und modifizierten Arylpolymeren sehr schwach. Wenn der Mischungsteil von PVDF erhöht wird, entsteht eine Phasenseparate in der Membran. Dadurch wird die Membran optisch trüb.

Der Gehalt an Weichmacher beträgt bis zu 5 Gew.-%, bevorzugt zwischen 0,001 und 3 Gew.-%, insbesondere zwischen 0,1 und 2 Gew.-%, bezogen auf das Gesamtpolymere.

Das PVDF ist kommerziell erhältlich und zeichnet sich durch hervorragende chemische und thermische Stabilität aus. Die chemische Struktur von PVDF läßt sich wie folgt beschreiben

$$\left[CF_2 - CF_2\right]_n$$

Die Herstellung der erfindungsgemäßen Drei-Komponenten-Blendpolymermembran wird ebenfalls nach dem nachstehenden Verfahren durchgeführt.

Die Herstellung der erfindungsgemäßen Blendpolymermembranen wird wie folgt durchgeführt: Eine Lösung einer homogenen Polymermischung enthaltend das sulfonierte Arylpolymer, das aminierte PES oder das nitrierte PES sowie Weichmacher wird auf einen Träger eingegossen und anschließend ein einheitlich dicker Film mit einer Rakel ausgezogen. Das Lösungsmittel im Film wird z.B. durch Abdampfen entfernt. Als Lösungsmittel eignen sich insbesondere Dimethylformamid (DMF), Dimethylfoxid (DMSO), N-Methylpyrrolidon (NMP) oder N,N-Dimethylacetamid (DMAC). Anschließend wird der trockene Film vom Träger abgelöst und die hergestellte Membran konditioniert.

Mit Hilfe der vorliegenden Erfindung wird ein wirtschaftlich günstiges Polymerblendmaterial bereitgestellt, wobei das Ausgangspolymer preiswerter ist und Modifikationsverfahren von PES und PEES und die Herstellung der Blendpolymermembran einfach sind.

Der Membranaufbau bzw. die Membraneigenschaften wie Leitfähigkeit, Membranquellung lassen sich je nach dem Anwendungszweck einstellen, wobei im Vergleich zu den Membranen aus sulfoniertem Arylpolymer die erfindungsgemäßenen Blendpolymermembranen verbesserte mechanische und thermische Eigenschaften aufweisen.

Die erfindungsgemäße Blendpolymermembran kann sich aus einer Schicht oder aus mehreren gleichen oder unterschiedlichen Schichten (Multilayer) bestehen, z. B. aus Doppelschicht aus a) sulfoniertem Arylpolymer und aminiertem Polysulfon und b) sulfoniertem Arylpolymer und nitriertem Polysulfon. Weiterhin sind diverse Multischicht-Membranen erfindungsgemäß, die mindestens zwei unterschiedliche Schichten ausgewählt aus der Gruppe SPEK und $NH_2$-PES, SPEK und $NO_2$-PES SPEK und $NH_2$-PES und Weichmacher, SPEK und $NO_2$-PES und Weichmacher.

Die vorliegende Erfindung wird durch die nachfolgenden Ausführungsbeispiele näher erläutert, wobei diese die Erfindung nicht einschränken sollen:

Allgemeine Vorschrift zur Membrancharakterisierung

- Ionenaustauscherkapazität (IEC, meq/g): Zur Bestimmung der Ionenaustauscherkapazität der Membran wurde die potentiometrische Titration eingesetzt.
- Quellung (Que, Gew.%): Die Membranquellung ist abhängig von dem Medium, der Temperatur und der Zeit. Die Membranprobe wurde in Wasser bei einer bestimmten Temperatur innerhalb einer Zeit konditioniert. Danach wurde das Wassergehalt in der Probe ermittelt.
- Leitfähigkeit (Lf, mS/cm): Die Leitfähigkeit der Membran wurde in Wasser in einer Meßzelle, bezogen auf die Temperatur von 20 °C bis 90 °C mit Hilfe der Impedanzspektroskopie (Fr. Zahnler) gemessen.
- Mechanische Eigenschaften (E-Modul, $N/mm^2$; Bruchdehnung, %): Zur Bestimmung der mechanischen Eigenschaften der Membran wurde die Probe 4h in Klimaschrank bei 23 °C und 50%-Feuchte vorbehandelt oder die Probe wurde 30 min in Wasser bei 23 °C und bei 80 °C konditioniert. Danach wurde die Probe mit Hilfe der Zug-Dehnungs-Maschine (Fr. Zwick; Vorkraft: 0,5 N; Geschwindigkeit Zyklus: 50 mm/min) vermessen.
- Thermische Eigenschaften: Die Glasübergangs- und Zersetzungstemperatur der Membran wurden mit Hilfe von DSC und TGA (Fr. Mettler Toledo; 10 k/min) bestimmt.
- Stoffdurchlässigkeit: Wasserstoff-, Sauerstoff- (Gasdruck: 1 bar) und Methanoldurchlässigkeit (32g Methanol in 1000g $H_2O$) wurden in Abhängigkeit der Temperatur bei Fr. S. Pauly /A. Becker in Wiesbaden mit Hilfe der Membranzelle gemessen.

Zum Vergleich wird eine kommerziell erhältliche perfluorierte Polymermembran mit einem IEC von 0,9 meq/g, die eine Membranquellung (80 °C in Wasser) von Que=31 Gew.% besitzt.

Die mechanische Eigenschaften der Vergleichsmembran sind in der nachfolgenden Tabelle wiedergegeben:

| | |
|---|---|
| E-Modul ($N/mm^2$); in Feuchte; 23°C | 300 $N/mm^2$ |
| E-Modul ($N/mm^2$); in Wasser; 80°C | 50 $N/mm^2$ |
| Bruchdehnung (%) in Feuchte; 23°C | 175 % |
| Bruchdehnung (%) in Wasser; 80°C | 255 % |

Die Stoffdurchlässigkeit der Vergleichsmembran ist wie folgt:

| Temperatur (°C) | Methanol /$H_2O$ (g/$m^2$.d) (32g/1000g $H_2O$) | $O_2$-Durchlässigkeit [$cm^3$ 50µm/($m^2$ d bar)] | $H_2$-Durchlässigkeit [$cm^3$ 50µm /($m^2$ d bar)] |
|---|---|---|---|
| 40 | 61,9 | 2350 | 9880 |
| 60 | 151 | 5250 | 18800 |
| 80 | 333 | 8590 | 36300 |
| 100 | 674 | 14300 | 65200 |
| 120 | 1266 | 23300 | 113100 |

Ausführungsbeispiele 1 bis 2

Blendpolymermembranen aus sulfoniertem PEEK (SPEEK) und aminiertem PES($NH_2$-PES)

Das SPEEK beträgt die Ionenaustauscherkapazität von 1,73 meq/g. Das $NH_2$-PES beträgt den Substitutionsgrad von 45% (1,9meq/g). Die Blendpolymermembran TE-4 besteht aus 90 Gew.%igen SPEEK und 10 Gew.%igen $NH_2$-PES, TE-5 aus 85 Gew.%igen SPEEK und 15 Gew.%igen $NH_2$-PES.

Im folgenden sind die Charakterisierungsdaten der Membranen:

- Berechnete IEC: TE-4: IEC=1,56 meq/g; TE-5:IEC=1,47 meq/g.
- Membranquellung (80°C; 48h): TE-4: Que=182,7 Gew.%; TE-5: Que=83,8 Gew.%.

| Leitfähigkeit | | |
|---|---|---|
| T (°C) | TE-4 (mS/cm) | TE-5 (mS/cm) |
| 23 | 64,6 | 28,9 |
| 30 | 73,6 | 34,4 |
| 40 | 85,5 | 40,8 |
| 50 | 97,3 | 47,6 |
| 60 | 108,9 | 53,8 |
| 70 | 120,3 | 59,2 |
| 80 | 131,4 | 63,6 |

| Mechanische Eigenschaften | TE-4 | TE-5 |
|---|---|---|
| E-Modul (N/$mm^2$); in Feuchte; 23°C | 1717,3 | 1212,5 |
| E-Modul (N/$mm^2$); in Wasser; 80°C | 348,6 | 492,9 |
| Bruchdehnung (%) in Feuchte; 23°C | 20,4 | 39,5 |
| Bruchdehnung (%) in Wasser; 80°C | 275,3 | 268,8 |

Die Stoffdurchlässigkeit in der Membran TE-5 beträgt 2,35 [g.50 µm/($m^2$.d)] bei 40°C.

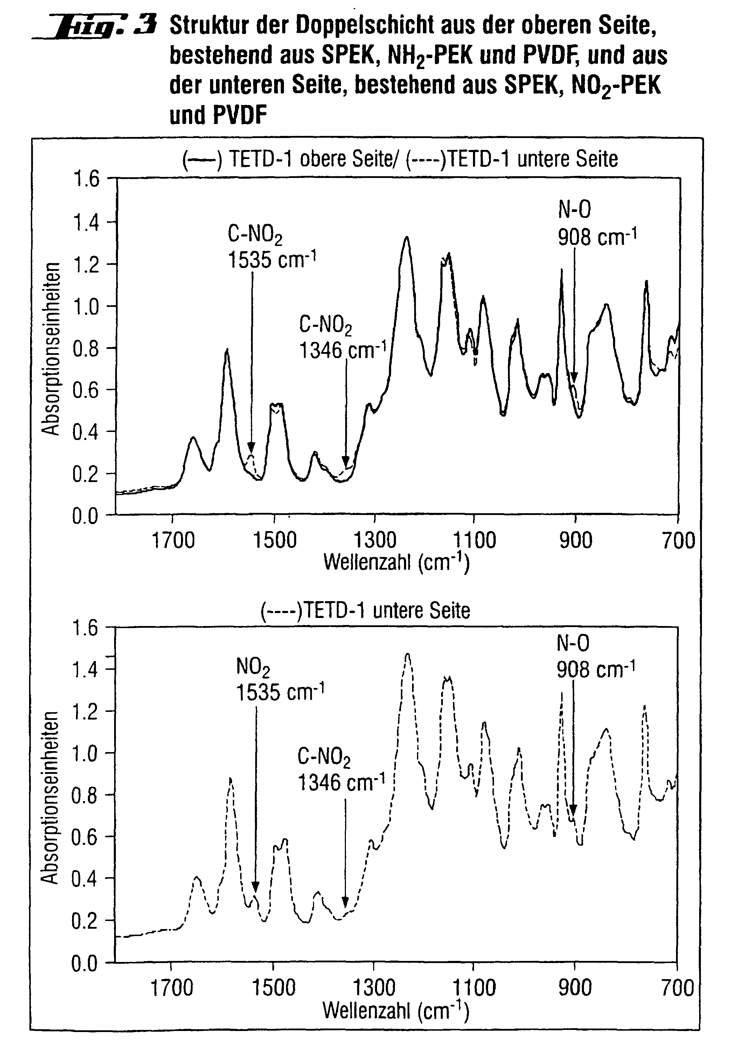

Die Wasserstoff- und Sauerstoffdurchlässigkeit in Abhängigkeit der Temperatur (TE-5) wird durch die Figur 1 aufgezeigt:

Ausführungsbeispiele 3 bis 4

Blendpolymermembranen aus sulfoniertem PEEKK (SPEEKK) und aminiertem PES($NH_2$-PES)

Das SPEEKK beträgt die Ionenaustauscherkapazität von 1,65 meq/g. Das $NH_2$-PES beträgt den Substituti-

onsgrad von 45% (1,9meq/g). Die Blendpolymermembran TE-8 besteht aus 90 Gew.%igen SPEEKK und 10 Gew.%igen $NH_2$-PES, TE-9 aus 85 Gew.%igen SPEEKK und 15 Gew.%igen $NH_2$-PES.

Im folgenden sind die Charakterisierungsdaten der Membranen.

- Berechnete IEC: TE-8: IEC=1,49 meq/g; TE-9:IEC=1,40 meq/g.
- Membranquellung (80°C; 48h): TE-8: Que=137,4 Gew.%; TE-9: Que=95,2 Gew.%.

| Leitfähigkeit | | |
|---|---|---|
| T (°C) | TE-8 (mS/cm) | TE-9 (mS/cm) |
| 23 | 45,4 | 28,0 |
| 30 | 54,7 | 34,0 |
| 40 | 64,0 | 40,1 |
| 50 | 73,4 | 46,3 |
| 60 | 82,6 | 52,3 |
| 70 | 91,6 | 58,4 |
| 80 | 99,5 | 63,8 |

| Mechanische Eigenschaften | TE-8 | TE-9 |
|---|---|---|
| E-Modul ($N/mm^2$); in Feuchte; 23°C | 907,8 | 1181,4 |
| E-Modul ($N/mm^2$); in Wasser, 80°C | 442,3 | 486,0 |
| Bruchdehnung (%) in Feuchte; 23°C | 11,6 | 17,6 |
| Bruchdehnung (%) in Wasser, 80°C | 230,2 | 190,1 |

Die Methanoldurchlässigkeit in der Membran TE-8 beträgt 4,11 [g.50 µm/($m^2$.d)] bei 40 °C.

Beispiele 5 bis 7

Blendpolymermembranen aus sulfoniertem PEK (SPEK) und nitriertem PES ($NO_2$-PES)

Das SPEK beträgt die Ionenaustauscherkapazität von 2,13 meq/g. Das $NO_2$-PES beträgt den Substitutionsgrad von 50 % (1,97meq/g). Die Blendpolymermembran TE-23 besteht aus 80 Gew.%igen SPEK und 20 Gew.%igen $NO_2$-PES, TE-24 aus 75 Gew.%igen SPEK und 25 Gew.%igen $NO_2$-PES TE-25 aus 70 Gew.%igen SPEK und 30 Gew.%igen $NO_2$-PES.

Im folgenden sind die Charakterisierungsdaten der Membranen.

- Berechnete IEC: TE-23: IEC=1,70 meq/g; TE-24: IEC=1,60 meq/g, TE-25: IEC=1,49 meq/g.
- Membranquellung (80°C in Wasser): TE-23: Que=99 Gew.%; TE-24: Que=68 Gew.%, TE-25: Que=47 Gew.%.

| Mechanische Eigenschaften von TE-25 | |
|---|---|
| E-Modul ($N/mm^2$); in Feuchte; 23°C | 2319,1 $N/mm^2$ |
| E-Modul ($N/mm^2$); in Wasser; 80°C | 402 $N/mm^2$ |
| Bruchdehnung (%) in Feuchte; 23°C | 24,2 % |
| Bruchdehnung (%) in Wasser; 80°C | 219,3 % |

Beispiele 8 bis 10

Blendpolymermembranen aus sulfoniertem PEK (SPEK) und aminiertem PES ($NH_2$-PES)

Das SPEK beträgt die Ionenaustauscherkapazität von 2,13 meq/g. Das $NH_2$-PES beträgt den Substitutionsgrad von 45 % (1,9meq/g). Die Blendpolymermembran TE-1 besteht aus 85 Gew.%igen SPEK und 15 Gew.%igen $NH_2$-PES, TE-2 aus 80 Gew.%igen SPEK und 20 Gew.%igen $NH_2$-PES, TE-3 aus 75 Gew.%igen SPEK und 25 Gew. %igen $NH_2$-PES.
Im folgenden sind die Charakterisierungsdaten der Membranen.

- Berechnete IEC: TE-1: IEC=1,82 meq/g; TE-2: IEC=1,71 meq/g, TE-3: IEC=1,61 meq/g.
- Membranquellung (80°C in Wasser): TE-1: Que=167,2 Gew.%; TE-2: Que=122 Gew.%, TE-3: Que=70,4 Gew.%.

| Leitfähigkeit | | | |
|---|---|---|---|
| T (°C) | TE-1 (mS/cm) | TE-2 (mS/cm) | TE-3 (mS/cm) |
| 23 | 115,8 | 91,4 | 68,6 |
| 30 | 135,8 | 107,5 | 81,4 |
| 40 | 155,5 | 123,6 | 94,4 |
| 50 | 174,8 | 139,3 | 107,1 |
| 60 | 193,2 | 154,3 | 119,4 |
| 70 | 210,9 | 168,9 | 131,4 |
| 80 | 227,9 | 182,3 | 141,9 |

| Mechanische Eigenschaften | TE-1 | TE-2 | TE-3 |
|---|---|---|---|
| E-Modul ($N/mm^2$); in Feuchte; 23°C | 2020,8 | 2420,6 | 2455,7 |
| E-Modul ($N/mm^2$); in Wasser, 80°C | 52,7 | 134,3 | 357,9 |
| Bruchdehnung (%) in Feuchte; 23°C | 30,8 | 23,4 | 10,3 |
| Bruchdehnung (%) in Wasser, 80°C | 290,6 | 301,8 | 249,1 |

Ausführungsbeispiel 11

Dreikomponenten-Blendpolymermembran aus 75 Gew.%igem SPEK (IEC=2,13meq/g), 25 Gew.%igem $NO_2$-PES (IEC=1,96meq/g) und 0,5 Gew.%igem PVDF (TE-29)

Im folgenden sind die Charakterisierungsdaten der Membranen.

- Gemessene IEC (Säure-Base-Titration): TE-29: IEC=1,40 meq/g.
- Membranquellung (100°C, 72h in Wasser ): TE-29: Que=162 Gew.%
- Leitfähigkeit: 23°C: 83,3mS/cm; 30°C: 99,0mS/cm; 40°C: 114,6mS/cm; 50°C: 130,1 mS/cm; 60°C: 145,0mS/cm; 70°C: 159,4mS/cm; 80°C: 172,4mS/cm.

| Mechanische Eigenschaften | TE-29 |
|---|---|
| E-Modul ($N/mm^2$); in Feuchte; 23°C | 2051,9 |
| E-Modul ($N/mm^2$); in Wasser, 80°C | 188,7 |
| E-Modul ($N/mm^2$); in Wasser, 100°C, 72h | 52,9 |

(fortgesetzt)

| Mechanische Eigenschaften | TE-29 |
|---|---|
| Bruchdehnung (%) in Feuchte; 23°C | 57,3 |
| Bruchdehnung (%) in Wasser, 80°C | 260,4 |
| Bruchdehnung (%) in Wasser, 100°C, 72h | 112 |

Ausführungsbeispiel 12 bis 19

Dreikomponenten Blendpolymermembranen aus SPEK, $NH_2$-PES (IEC=1,9 meq/g) und PVDF.

| Membran Nr. | Materialien & Mischungsverhätnis | IEC* (meq/g) | Que** (Gew.%) | Que*** (Gew.%) | Lf, 80°C (mS/cm) | Lf, 90°C (mS/cm) |
|---|---|---|---|---|---|---|
| TE-28 | SPEK (2,13meq/g): 75%<br>$NH_2$-PES (1,9meq/g): 25%<br>PVDF: 0,5% | 1,49 | | 185 | 82,8 | -- |
| TE-31 | SPEK (2,13meq/g): 75%<br>$NH_2$-PES (1,9meq/g): 25%<br>PVDF: 1 % | 1,45 | 59 | 182 | 78 | - |
| TE-40 | SPEK (2,13meq/g): 70%<br>$NH_2$-PES (1,9meq/g): 30%<br>PVDF: 1 % | 1,41 | 33,7 | 135,4 | -- | - |
| TE-41 | SPEK (2,13meq/g): 70%<br>$NH_2$-PES (1,9meq/g): 30%<br>PVDF: 1,5% | 1,42 | 27,7 | 128 | 53,6 | 74,7 |
| TE-42 | SPEK (1,83meq/g): 75%<br>$NH_2$-PES (1,9meq/g): 25%<br>PVDF: 1 % | 1,29 | 14 | 91 | 27,2 | 37,9 |
| TE-43 | SPEK (1,90meq/g): 75%<br>$NH_2$-PES (1,9meq/g): 25%<br>PVDF:1% | 1,44 | 16 | 69 | - | - |
| TE-58 | SPEK (1,90meq/g): 70%<br>$NH_2$-PES (1,9meq/g): 30%<br>PVDF: 1% | 1,25 | 25,7 | 101,7 | 56 | - |
| TE-45 | SPEK (1,64meq/g): 80%<br>$NH_2$-PES (1,9meq/g): 20%<br>PVDF: 0,5% | 1,36 | 12 | 68 | - | - |
| TE-70 | SPEK (2,17meq/g): 80%<br>$NH_2$-PES (3,8meq/g): 20%<br>PVDF: 1% | 1,64 | - | 204,7 | 80 | |

*Potentiometrische Titration mit 0,1 N NaOH.
**Die Probe wurde in Wasser 72h bei 80 °C gekocht.
***Die Probe wurde in Wasser 72h bei 100 °C gekocht.

Mechanische Eigenschaften:

- TE-28 (23°C; 50%-Feuchte): E-Modul: 2689,7 $N/mm^2$; Bruchdehnung: 23,7%.
- In der nachfolgenden Tabelle sind die mechanischen Eigenschaften der Membranen in Wasser bei 80°C aufgeführt.

| Mechanische Eigenschaften der Membranen (80°C in Wasser) | | | | | | | | |
|---|---|---|---|---|---|---|---|---|
| | TE-28 | TE-31 | TE-40 | TE-41 | TE-42 | TE-43 | TE-58 | TE-45 |
| E-Modul ($N/mm^2$) | 420,4 | 428,8 | 502,3 | 480,9 | 806,6 | 824,6 | 701 | 995,6 |
| Bruchdehnung (%) | 246,6 | 278,3 | 202,5 | 127,5 | 83 | 16,6 | 28,2 | 177,9 |

| Mechanische Eigenschaften der Membranen ( 100°C; 72h in Wasser)* | | |
|---|---|---|
| | TE-58 | TE-70 |
| E-Modul ($N/mm^2$) | 195,6 | 269,1 |
| Bruchdehnung (%) | 128,3 | 231,7 |

Die Membranen wurden 72h in Wasser bei 100°C gekocht.

Dynamische-Mechanische Analyse:

Durch die Dynamisch-Mechanische Analyse wird das Steifigkeits- und Dämpfungsverhalten eines Probekörpers quantitativ durch den Speichermodul E', Verlustmodul E" und Verlustfaktor tan δ als Funktion der Temperatur, Zeit und Frequenz beschrieben.

Das Meßgerät ist ein Dynamisch-Mechanischer Analysator DMA 242 (Fa. Netzsch-Gerätebau GmbH). Die Versuchsbedingungen sind wie folgt:

Meßmodus: Zug
Zielamplitude: 30µm (auto.)
Statische Kraft: Prop.: 1,2
Dynamische Kraft: 0,5N
Frequenz: 1 Hz
Temperaturbereich: -50 °C bis 300°C
Heizrate: 5K/min
Probebreite: 4mm

Während der Messung schrumpfen die Folien mit zunehmender Temperatur. Durch den weiteren Temperaturanstieg dehnt sich die Probe aus. Ab 200 °C fällt der Modul stark ab, Die Probe dehnt sich enorm aus und die tan δ -Kurve erfährt ein Maximum.
Aus dem Maximum ergibt sich eine Glasübergangstemperatur von 254 °C von TE-31 und TE-28. In der Tab.sind die Ergebnisse aufgeführt.

| Speichermodulwerte (E') in Abhängigkeit der Temperatur | | | | |
|---|---|---|---|---|
| Membran-Nr. | E'(MPa); -30°C | E'(MPa); 0°C | E'(MPa); RT | E'(MPa); 100°C |
| TE-31 | 2500 | 1800 | 1700 | 1900 |
| TE-28 | 2700 | 2300 | 1500 | 2400 |
| Nafion-115* | 1400 | 370 | 430 | 60 |

*Vergleichsbeispiel;
Die Membranen TE-31 und sulfoniertes, perfluoriertes Polymer, beispielsweise Nafion-115 zeichnen sich durch ein hohes Dämpfungsverhalten aus.

Thermische Eigenschaften

Die Glasübergangstmperatur wurde mit Hilfe von DSC ermittelt, und die Zersetzungstemperatur wurde mit

Hilfe von TGA bestimmt.

| Material | DSC | TGA |
|---|---|---|
| PVDF | Tm=148,5°C | Ab 400°C |
| $NH_2$-PES | Tg=238,6°C | Ab 320 °C |
| SPEK | Tg=181,7 °C | Ab 300°C |
| Blendmembran | $Tg_1$=167,5°C; $Tg_2$=227,3 °C | Ab: 300 °C |

| Soffdurchlässigkeit von TE-42 | | | |
|---|---|---|---|
| Temperatur (°C) | Methanol /$H_2O$ (g/$m^2$.d) (32g/1000g$H_2O$) | $O_2$-Durchlässigkeit [$cm^3$ 50μm/($m^2$ d bar)] | $H_2$-Durchlässigkeit [$cm^3$ 50μm /($m^2$ d bar)] |
| 40 | 2,5 | 293 | 3770 |
| 60 | 6.8 | 351 | 5380 |
| 80 | 16,1 | 417 | 7410 |
| 100 | 36 | 547 | 10250 |
| 120 | 67 | 763 | 14130 |

Prüfung der Membranen in Direct Methanol Brennstoffzelle (DMFC)

Membran TE-31:
Betriebstemperatur: T=100°C;
Platin-Gehalt der Elektroden: Anode: 0,16 mg/$cm^2$; Kathode: 0,62 mg/$cm^2$; Brennstoffe: 1,0 M Methanol; Methanol/Luft;
Strom-Spannung-Verhältnis: 150 mA/$cm^2$ bei 430 mV; 200mA/$cm^2$ bei 375 mV, 300mA/$cm^2$ bei 250 mV.
Diese Membran war sehr stark gequollen in DMFC.

Membran TE-41:
Betriebstemperatur: T=110°C;
Platin-Gehalt der Elektroden: Anode: 0,16 mg/$cm^2$; Kathode: 0,62 mg/$cm^2$; Brennstoffe: 0,4 M Methanol; Methanol/Luft: 3/3bar;
Strom-Spannung-Verhältnis: 200 mA/$cm^2$ bei 468 mV, 300 mA/$cm^2$ bei 308 mV.

Membran TE-42:
Betriebstemperatur: T=110°C;
Platin-Gehalt der Elektroden: Anode: 0,16 mg/$cm^2$; Kathode: 0,62 mg/$cm^2$; Brennstoffe: 0,4 M Methanol; Methanol/Luft: 3/3bar;
Strom-Spannung-Verhältnis: 200 mA/$cm^2$ bei 463 mV, 300 mA/$cm^2$ bei 300 mV.

In einer Brennstoffzelle werden Wasserstoff in die Anodezellen und Sauerstoff in die Kathodezellen eingeleitet. Es kann eine Reduktion des Membranmaterials mit Wasserstoff unter der katalytischen Wirkung von Platin stattfinden. Umgekehrt kann eine Oxidation des Membranmaterials mit Sauerstoff mit Platin ebenfalls stattfinden. Um die chemische Stabilität der Membran in Brennstoffzellen zu erhöhen, wurden die Blendpolymermembranen mit mehrschichtigem Aufbau (Multilayer) entwickelt.

Eine solche Membran mit der Doppelschicht aus insgesamt Vier-Komponenten. Eine der Doppelschicht besteht aus sulfoniertem PEK, aminiertem PES und PVDF, die andere aus sulfoniertem PEK, nitriertem PES und PVDF. Dabei ist die Komponente PES-$NO_2$ sehr stabil gegen Oxidation unter Sauerstoff, und PES-$NH_2$ sehr stabil gegen Reduktion unter Wasserstoff oder Methanol. Hierdurch wird die chemische Stabilität verbessert.

Die Herstellung der Mehrschichtmembran wird nach den folgenden Schritten ausgeführt:

- Zuerst wird eine Membranschicht nach dem in Abschnitt 1 beschriebenen Verfahren hergestellt.
- Auf diese Schicht wird noch ein dünner Film aus einer Polymerlösung gezogen. Das Lösungsmittel wird verdampft.

- Die hergestellte Doppelschicht wird konditioniert.

Ausführungsbeispiel 20

Die Struktur der Doppelschicht (TETD-1):

Zusammensetzung:

Obere Seite: SPEK (2,13 meq/g): 76,5 Gew.%; $NH_2$-PES (1,9meq/g): 22,5 Gew.%; PVDF: 1 Gew.%
Untere Seite: SPEK (2,13 meq/g): 75 Gew.%; $NO_2$-PES (1,97 meq/g): 24 Gew.%; PVDF: 1 Gew.%

Membranstruktur

In der Figur 3 sind die Spektren der Doppelschicht-Membran dargestellt. Aus dem Diagramm ist ersichtlich, daß die Absorptionsbanden der unteren Seite bei 1535 $cm^{-1}$, 1346 $cm^{-1}$ und 908 $cm^{-1}$ den Schwingungen von $NO_2$-PES zugeordnet werden.

| Leitfähigkeit von TETD-1 | | | | | | | |
|---|---|---|---|---|---|---|---|
| T (°C) | 80 | 70 | 60 | 50 | 40 | 30 | 20 |
| Oberseite (mS/cm) | 128,4 | 118,5 | 107,4 | 96,1 | 84,5 | 72,3 | 61,1 |
| Unterseite (mS/cm) | 128,6 | 119,0 | 108,0 | 96,9 | 85,0 | 73,2 | 61,5 |

| Mechanische Eigenschaften von TETD-1 | TETD-1 |
|---|---|
| E-Modul ($N/mm^2$); in Feuchte; 23°C | 2222,1 |
| E-Modul ($N/mm^2$); in Wasser, 80°C | 217,0 |
| Bruchdehnung (%) in Feuchte; 23°C | 51,1 |
| Bruchdehnung (%) in Wasser, 80°C | 291,2 |

**Patentansprüche**

1. Membran enthaltend

   A) mindestens ein Funktionspolymer auf Basis eines oder mehrer sulfonsäuregruppentragende Arylpolymerer aufweist,
   B) mindestens einen Verstärkungspolymer auf Basis eines oder mehrer aminierter Polyethersulfone und/oder aminierter Polyetherethersulfone oder nitrierter Polyethersulfone und/oder nitrierter Polyetherethersulfone, welches durch seine Wechselwirkung mit dem Funktionspolymer die Stabilität der Membran gegen das Quellungsverhalten verbessert und
   C) mindestens einem Weichmacher der die Sprödigkeit der zuvorgenannten Polymere verringert.

2. Membran gemäß einem der Ansprüche 1 oder 2, **dadurch gekennzeichnet, daß** das sulfonierte Arylpolymere aromatische Bausteine ausgewählt aus der Gruppe

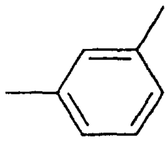

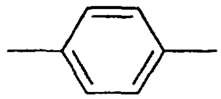

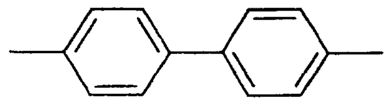

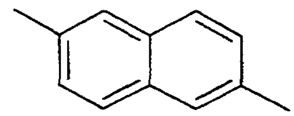

und temperaturstabile Bindungen ausgewählt aus der Gruppe

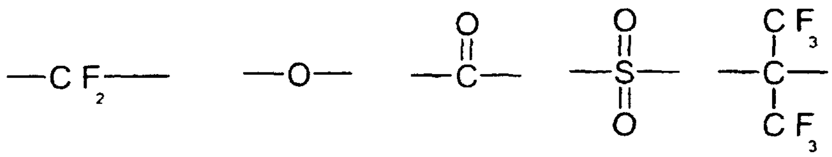

enthält.

3. Membran gemäß Anspruch 1, **dadurch gekennzeichnet, daß** als sulfoniertes Arylpolymer sulfoniertes Polyetheretherketon, sulfoniertes Polyetherketon, sulfoniertes Polyetheretherketonketon, sulfoniertes Polyethersulfon und sulfoniertes Polyetherethersulfon oder PBI eingesetzt wird.

4. Membran gemäß einem der Ansprüche 1 bis 3, **dadurch gekennzeichnet, daß** das sulfonierte Arylpolymere einen Sulfonierungsgrad zwischen 0,1 und 100 % aufweist.

5. Membran gemäß einem der Ansprüche 1 bis 4, **dadurch gekennzeichnet, daß** das sulfonierte Arylpolymere in Mengen zwischen 30 und 99,9 Gew.-% bezogen auf das Gesamtpolymere eingesetzt wird.

6. Membran gemäß einem der Ansprüche 1 bis 5, **dadurch gekennzeichnet, daß** als Verstärkungsspolymer ein oder mehrere aminierte Polyethersulfone und Polyetherethersulfone enthaltend die Struktureinheiten

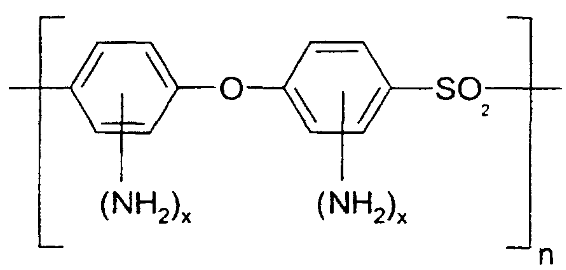

oder

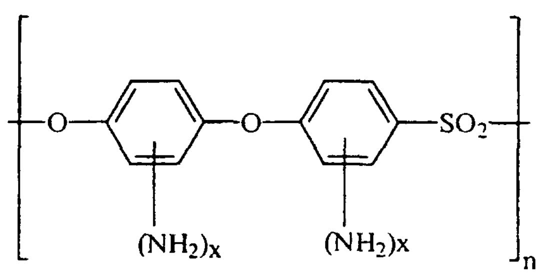

bei denen x unabhängig eine ganze Zahl 0, 1, 2, 3 oder 4 ist, eingesetzt werden.

7. Membran gemäß einem der Ansprüche 1 bis 6, **dadurch gekennzeichnet, daß** als Verstärkungsspolymer ein oder mehrere nitrierte Polyethersulfone und Polyetherethersulfone enthaltend die Struktureinheiten

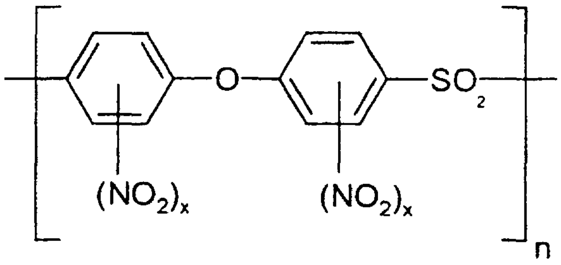

oder

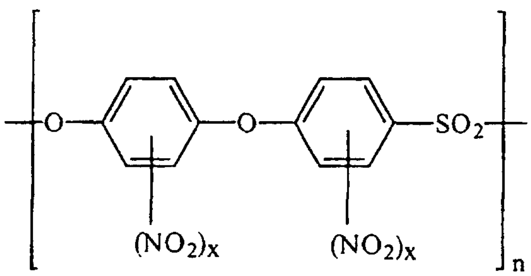

bei denen x unabhängig eine ganze Zahl 0, 1, 2, 3 oder 4 ist, eingesetzt werden.

8. Membran gemäß einem der Ansprüche 1 bis 7, **dadurch gekennzeichnet, daß** als Verstärkungspolymer ein aminiertes Polyethersulfon oder ein aminiertes Polyetherethersulfon enthaltend die Struktureinheiten der Typen

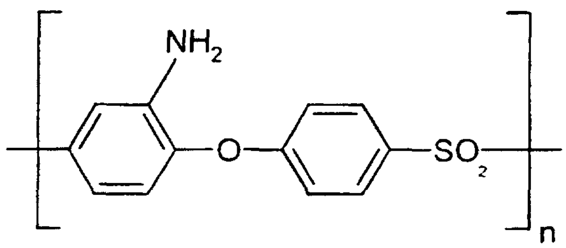

oder

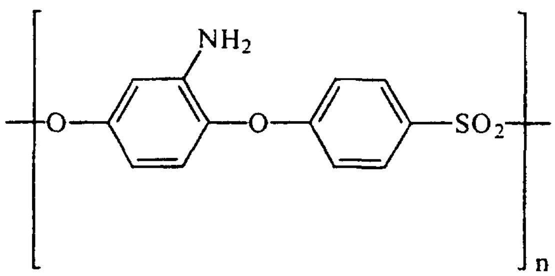

eingesetzt wird.

**9.** Membran gemäß einem der Ansprüche 1 bis 8, **dadurch gekennzeichnet, daß** als Verstärkungsspolymer ein nitriertes Polyethersulfon oder ein nitriertes Polyetherethersulfon enthaltend die Struktureinheiten der Typen

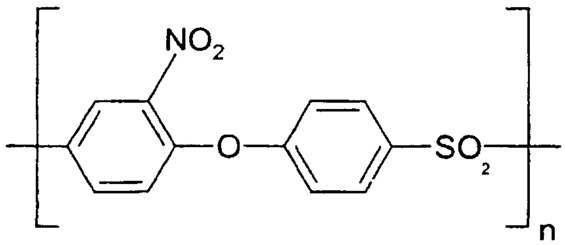

oder

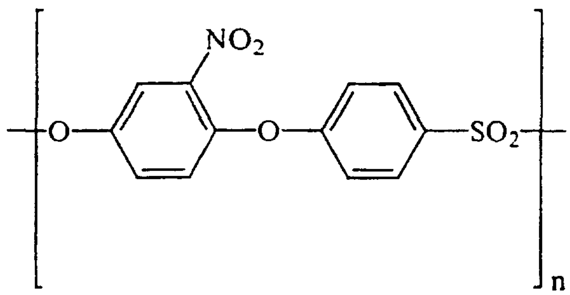

eingesetzt wird.

**10.** Membran gemäß einem der Ansprüche 1 bis 9, **dadurch gekennzeichnet, daß** das erfindungsgemäße Verstärkungspolymer in Mengen zwischen 0,1 und 70 Gew.-% bezogen auf das Gesamtpolymere eingesetzt wird.

**11.** Membran gemäß einem der Ansprüche 1 bis 10, **dadurch gekennzeichnet, daß** der Weichmacher die Sprödigkeit der aus dem Polymerblend hergestellten Membran verringert

**12.** Membran gemäß einem der Ansprüche 1 bis 11, **dadurch gekennzeichnet, daß** der Weichmacher unter den in einer Brennstoffzelle herrschenden Bedingungen innert ist.

**13.** Membran gemäß einem der Ansprüche 1 bis 12, **dadurch gekennzeichnet, daß** der Weichmacher mit dem Funktions- und Verstärkungspolymeren mischbar und verträglich ist.

**14.** Membran gemäß einem der Ansprüche 1 bis 13, **dadurch gekennzeichnet, daß** der Weichmacher in Dimethylformamid (DMF), Dimethylfoxid (DMSO), N-Methylpyrrolidon (NMP) oder N,N-Dimethylacetamid (DMAC) löslich ist.

**15.** Membran gemäß einem der Ansprüche 1 bis 14, **dadurch gekennzeichnet, daß** als Weichmacher ein lineares Polyvinylidenfluorid (PVDF) verwendet.

**16.** Membran gemäß einem der Ansprüche 1 bis 15, **dadurch gekennzeichnet, daß** der Gehalt an Weichmacher bis zu 5 Gew.-% bezogen auf das Gesamtpolymere beträgt.

**17.** Membran gemäß einem der Ansprüche 1 bis 16, **dadurch gekennzeichnet, daß** sie aus mehreren gleichen oder unterschiedlichen Schichten (Multilayer) besteht.

**18.** Membran gemäß Anspruch 17, **dadurch gekennzeichnet, daß** die Membran aus mindestens 2 unterschiedlichen Schichten ausgewählt aus der Gruppe sulfoniertes Polyetherketon und aminiertem Polyethersulfon, sulfoniertes

Polyetherketon und nitriertem Polyethersulfon, sulfoniertes Polyetherketon und aminiertem Polyethersulfon und Weichmacher, sulfoniertes Polyetherketon und nitriertem Polyethersulfon und Weichmacher, besteht.

**19.** Verwendung der Membran gemäß einem oder mehreren der Ansprüche 1 bis 18 zur Herstellung von Membran-Elektroden-Einheiten (MEA) für Brennstoffzellen, insbesondere für Niedertemperatur-Brennstoffzellen unter der Betriebstemperatur von 10°C bis 200 °C beansprucht.

**20.** Brennstoffzelle enthaltend eine Polymer-Elektrolyt-Membran gemäß einem oder mehreren Ansprüchen 1 bis 18.

**Claims**

**1.** Membrane comprising

A) at least one functional polymer based on one or more aryl polymers carrying sulphonic acid groups,
B) at least one reinforcing polymer based on one or more aminated polyether sulphones and/or aminated polyether ether sulphones or nitrated polyether sulphones and/or nitrated polyether ether sulphones which improves the stability of the membrane to swelling through its interaction with the functional polymer, and
C) at least one plasticizer which reduces the brittleness of the above-mentioned polymers.

**2.** Membrane according to one of Claims 1 and 2, **characterized in that** the sulphonated aryl polymer contains aromatic units selected from the group consisting of

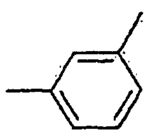 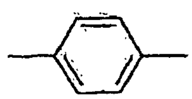 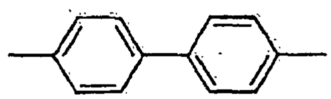 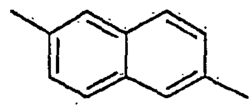

and temperature-stable bonds selected from the group consisting of

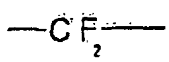 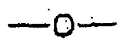 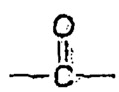 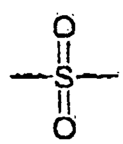 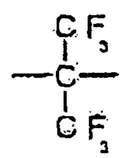

**3.** Membrane according to Claim 1, **characterized in that** the sulphonated aryl polymer employed is sulphonated polyether ether ketone, sulphonated polyether ketone, sulphonated polyether ether ketone ketone, sulphonated polyether sulphone and sulphonated polyether ether sulphone or PBI.

**4.** Membrane according to one of Claims 1 to 3, **characterized in that** the sulphonated aryl polymer has a degree of sulphonation of between 0.1 and 100%.

**5.** Membrane according to one of Claims 1 to 4, **characterized in that** the sulphonated aryl polymer is employed in amounts of between 30 and 99.9% by weight, based on the polymer as a whole.

**6.** Membrane according to one of Claims 1 to 5, **characterized in that** the reinforcing polymer employed is one or more aminated polyether sulphones and polyether ether sulphones containing the structural units

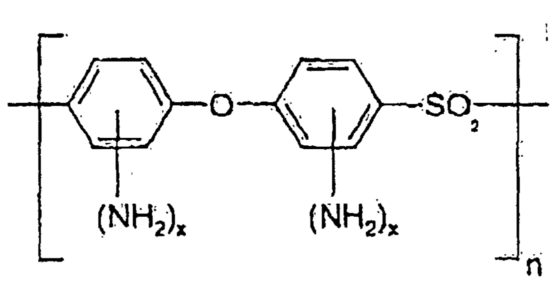

or

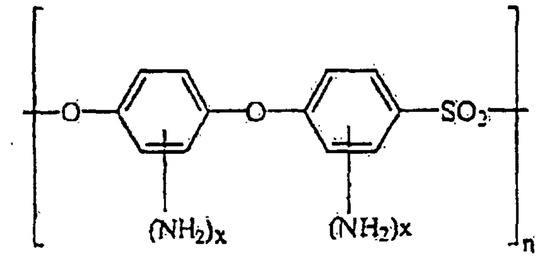

in which x, independently, is an integer 0, 1, 2, 3 or 4.

7. Membrane according to one of Claims 1 to 6, **characterized in that** the reinforcing polymer employed is one or more nitrated polyether sulphones or polyether ether sulphones containing the structural units

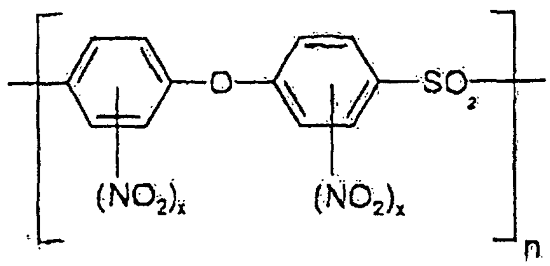

or

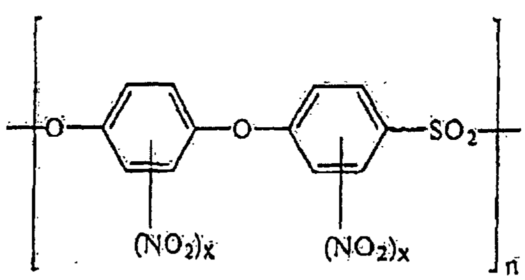

in which x, independently, is an integer 0, 1, 2, 3 or 4.

8. Membrane according to one of Claims 1 to 7, **characterized in that** the reinforcing polymer employed is an aminated polyether sulphone or an aminated polyether ether sulphone containing the structural units of the types

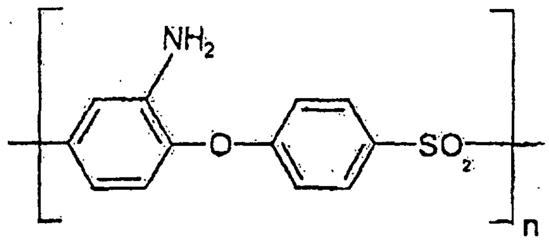

or

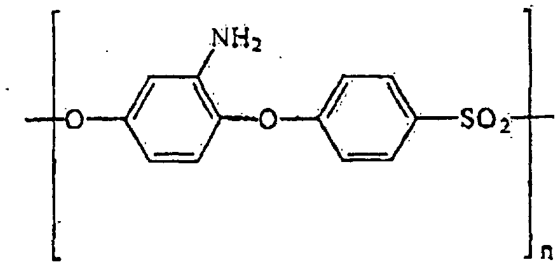

**9.** Membrane according to one of Claims 1 to 8, **characterized in that** the reinforcing polymer employed is a nitrated polyether sulphone or a nitrated polyether ether sulphone containing the structural units of the types

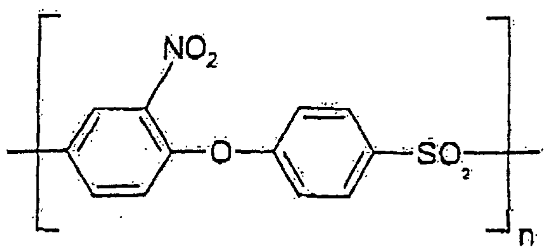

or

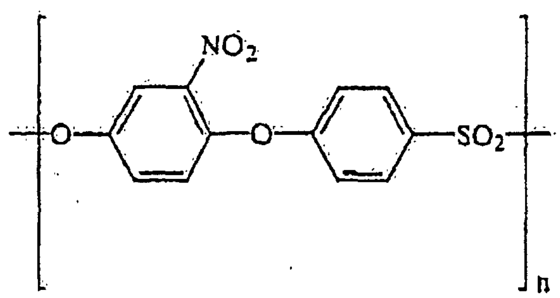

**10.** Membrane according to one of Claims 1 to 9, **characterized in that** the reinforcing polymer according to the invention is employed in amounts of between 0.1 and 70% by weight, based on the polymer as a whole.

**11.** Membrane according to one of Claims 1 to 10, **characterized in that** the plasticizer reduces the brittleness of the membrane produced from the polymer blend.

**12.** Membrane according to one of Claims 1 to 11, **characterized in that** the plasticizer is inert under the conditions

prevailing in a fuel cell.

**13.** Membrane according to one of Claims 1 to 12, **characterized in that** the plasticizer is miscible and compatible with the functional and reinforcing polymers.

**14.** Membrane according to one of Claims 1 to 13, **characterized in that** the plasticizer is soluble in dimethylformamide (DMF), dimethyl sulphoxide (DMSO), N-methylpyrrolidone (NMP) or N,N-dimethylacetamide (DMAC).

**15.** Membrane according to one of Claims 1 to 14, **characterized in that** the plasticizer used is a linear polyvinylidene fluoride (PVDF).

**16.** Membrane according to one of Claims 1 to 15, **characterized in that** the plasticizer content is up to 5% by weight, based on the polymer as a whole.

**17.** Membrane according to one of Claims 1 to 16, **characterized in that** it consists of a plurality of identical or different layers (multilayer).

**18.** Membrane according to Claim 17, **characterized in that** the membrane consists of at least 2 different layers selected from the group consisting of sulphonated polyether ketone and aminated polyether sulphone, sulphonated polyether ketone and nitrated polyether sulphone, sulphonated polyether ketone and aminated polyether sulphone and plasticizer, and sulphonated polyether ketone and nitrated polyether sulphone and plasticizer.

**19.** Use of the membrane according to one or more of Claims 1 to 18 for the production of membrane electrode units (MEUs) for fuel cells, claimed in particular for low-temperature fuel cells with the operating temperature of from 10°C to 200°C.

**20.** Fuel cell containing a polymer electrolyte membrane according to one or more of Claims 1 to 18.

## Revendications

**1.** Membrane contenant

A) au moins un polymère de fonction sur la base d'un ou de plusieurs arylpolymères porteur de groupes d'acide sulfonique,
B) au moins un polymère renforçant sur la base d'un ou de plusieurs polyéthersulfones aminés et/ou polyétheréther-sulfones aminés ou polyéthersulfones nitrés et/ou polyétheréther-sulfones nitrés, lequel améliore par son interaction avec le polymère de fonction la stabilité de la membrane contre le gonflement et
C) au moins un plastifiant qui réduit la fragilité des polymères cités ci-avant.

**2.** Membrane selon l'une des revendications 1 ou 2, **caractérisée en ce que** l'arylpolymère sulfoné contient des constituants aromatiques choisis dans le groupe

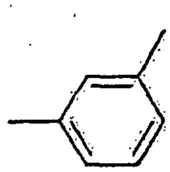 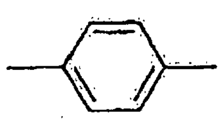 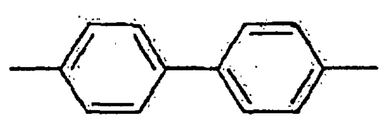 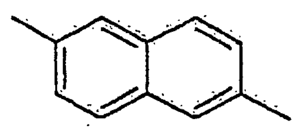

et des liaisons stables à la température choisies dans le groupe

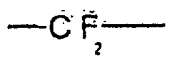 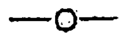 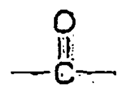 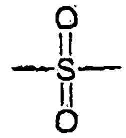 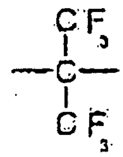

3. Membrane selon la revendication 1, **caractérisée en ce que** l'arylpolymère sulfoné utilisé est un polyétheréther-cétone sulfoné, un cétone de polyéther sulfoné, un cétone de polyétheréther-cétone sulfoné, un polyéthersulfone sulfoné et un polyétheréther-sulfone sulfoné ou un PBI.

4. Membrane selon l'une des revendications 1 à 3, **caractérisée en ce que** l'arylpolymère sulfoné présente un degré de sulfonation entre 0,1 et 100 %.

5. Membrane selon l'une des revendications 1 à 4, **caractérisée en ce que** l'arylpolymère sulfoné est utilisé dans des quantités entre 30 et 99,9 % en poids, rapporté au polymère total.

6. Membrane selon l'une des revendications 1 à 5, **caractérisée en ce que** le polymère renforçant utilisé est un ou plusieurs polyéthersulfones aminés et polyétheréther-sulfones contenant les motifs constitutifs

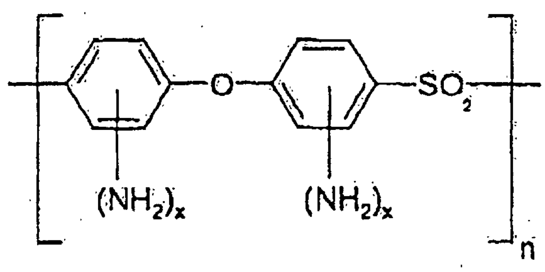

ou

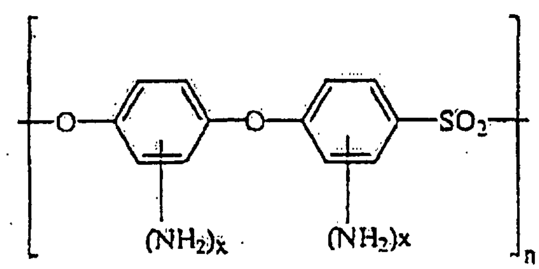

dans lesquels x est indépendamment un nombre entier 0, 1, 2, 3, ou 4.

7. Membrane selon l'une des revendications 1 à 6, **caractérisée en ce que** le polymère renforçant utilisé est un ou plusieurs polyéthersulfones nitrés et des polyétheréther-sulfones contenant les motifs constitutifs

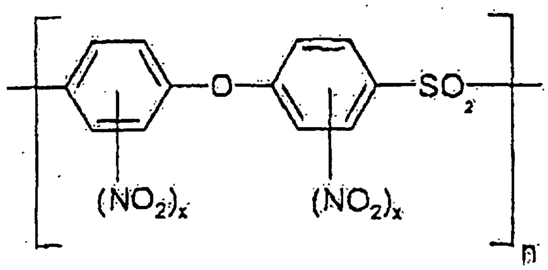

ou

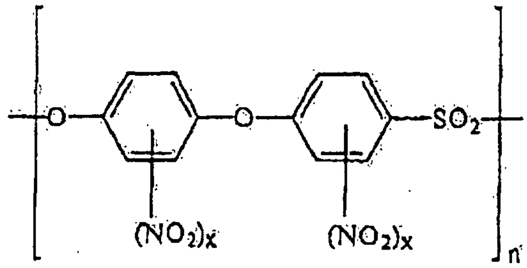

dans lesquels x est indépendamment un nombre entier 0, 1, 2, 3, ou 4.

**8.** Membrane selon l'une des revendications 1 à 7, **caractérisée en ce que** le polymère renforçant utilisé est un polyéthersulfone aminé ou un polyétheréther-sulfone aminé contenant les motifs constitutifs de types

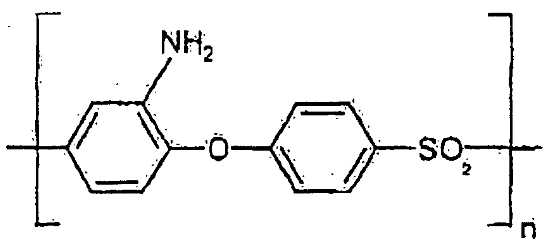

ou

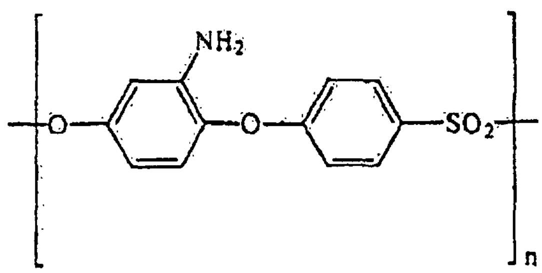

**9.** Membrane selon l'une des revendications 1 à 8, **caractérisée en ce que** le polymère renforçant utilisé est un

polyéthersulfone nitré ou un polyétheréther-sulfone nitré contenant les motifs constitutifs de types

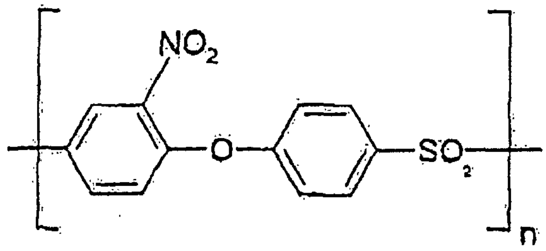

ou

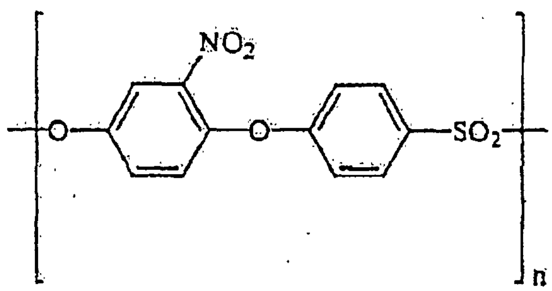

10. Membrane selon l'une des revendications 1 à 9, **caractérisée en ce que** le polymère renforçant selon l'invention est utilisé dans des quantités entre 0,1 et 70 % en poids, rapporté au polymère total.

11. Membrane selon l'une des revendications 1 à 10, **caractérisée en ce que** le plastifiant réduit la fragilité de la membrane fabriquée à partir du blend polymère.

12. Membrane selon l'une des revendications 1 à 11, **caractérisée en ce que** le plastifiant est inerte dans les conditions qui règnent dans une pile à combustible.

13. Membrane selon l'une des revendications 1 à 12, **caractérisée en ce que** le plastifiant est miscible et compatible avec le polymère de fonction et le polymère renforçant.

14. Membrane selon l'une des revendications 1 à 13, **caractérisée en ce que** le plastifiant est soluble dans du diméthylformadide (DMF), du diméthylsulfoxyde (DMSO), du N-méthylpyrrolidone (NMP) ou du N,N-diméthylacétamide (DMCA).

15. Membrane selon l'une des revendications 1 à 14, **caractérisée en ce que** le plastifiant utilisé est un polyfluorure de vinylidène (PVDF) linéaire.

16. Membrane selon l'une des revendications 1 à 15, **caractérisée en ce que** la teneur en plastifiant s'élève à jusqu'à 5 % en poids, rapporté au poids du polymère total.

17. Membrane selon l'une des revendications 1 à 16, **caractérisée en ce que** la membrane se compose de plusieurs couches pareilles ou différentes (multicouches).

18. Membrane selon la revendication 17, **caractérisée en ce que** la membrane se compose d'au moins deux couches différentes choisies dans le groupe cétone de polyéther sulfoné et polyéthersulfone aminé, cétone de polyéther sulfoné et polyéthersulfone nitré, cétone de polyéther sulfoné et polyéthersulfone aminé et plastifiant, cétone de polyéther sulfoné et polyéthersulfone nitré et plastifiant.

**19.** Utilisation de la membrane selon l'une ou plusieurs des revendications 1 à 18 pour la fabrication d'unités membrane-électrode (MEA) pour piles à combustibles, en particulier pour les piles à basse températures sollicitées à des températures de fonctionnement de 10 °C à 200 °C.

**20.** Pile à combustible contenant une membrane d'électrolyte polymère selon l'une ou plusieurs des revendications 1 à 18.

**Fig. 1** Wasserstoff- und Sauerstoffdurchlässigkeit in Abhängigkeit der Temperatur (TE- 5)

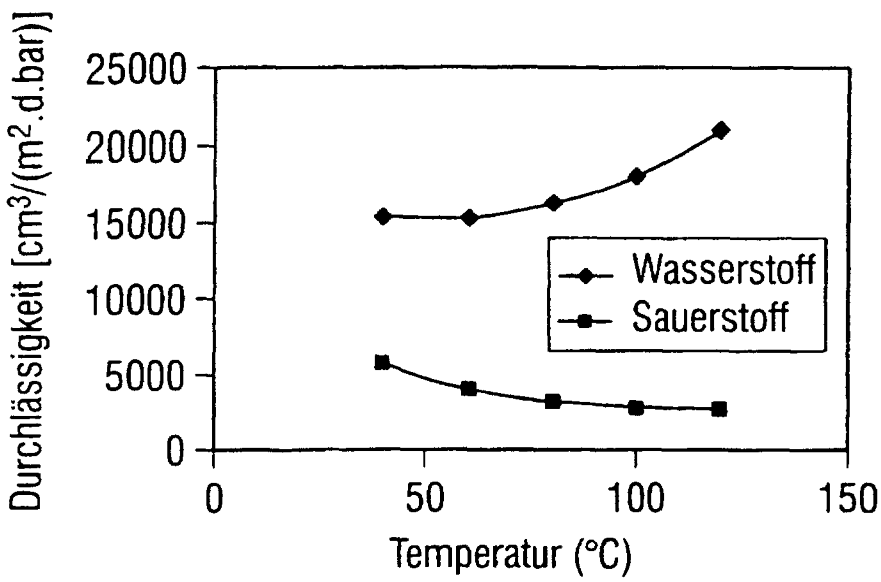


**Fig. 2** Leitfähigkeit in Abhängigkeit der Temperatur

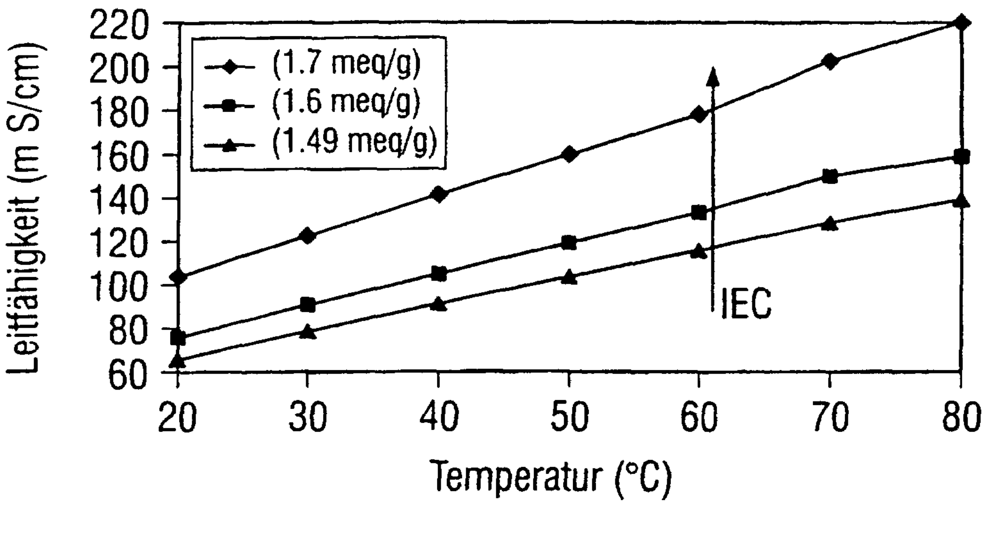

**Fig. 3** **Struktur der Doppelschicht aus der oberen Seite, bestehend aus SPEK, $NH_2$-PEK und PVDF, und aus der unteren Seite, bestehend aus SPEK, $NO_2$-PEK und PVDF**